Europäisches Patentamt

**European Patent Office**

**Office européen des brevets**

(19)

(11) Veröffentlichungsnummer: **0 188 680**
**B1**

(12) ## EUROPÄISCHE PATENTSCHRIFT

(45) Veröffentlichungstag der Patentschrift:
14.06.89

(51) Int. Cl.⁴: **B 60 R 13/02**

(21) Anmeldenummer: **85114168.9**

(22) Anmeldetag: **07.11.85**

(54) Innenverkleidungsteil für Kraftfahrzeuge und Vorrichtungen zu seiner Herstellung.

(30) Priorität: **17.01.85 DE 3501354**

(43) Veröffentlichungstag der Anmeldung:
**30.07.86 Patentblatt 86/31**

(45) Bekanntmachung des Hinweises auf die Patenterteilung:
**14.06.89 Patentblatt 89/24**

(84) Benannte Vertragsstaaten:
**BE DE FR GB IT SE**

(56) Entgegenhaltungen:
**DE-A- 3 033 166**
**DE-A- 3 233 675**
**FR-A- 2 287 333**
**FR-A- 2 358 272**
**GB-A- 599 652**
**GB-A- 658 242**
**GB-A- 2 096 195**

(73) Patentinhaber: **FORD-WERKE AKTIENGESELLSCHAFT,
Ottoplatz 2 Postfach 21 03 69, D-5000 Köln 21 (DE)**
(84) Benannte Vertragsstaaten: **BE DE IT SE**

(73) Patentinhaber: **FORD MOTOR COMPANY LIMITED,
Eagle Way, Brentwood Essex CM13 3BW (GB)**
(84) Benannte Vertragsstaaten: **GB**

(73) Patentinhaber: **FORD FRANCE SOCIETE ANONYME,
344 Avenue Napoléon Bonaparte B.P. 307, F-92506 Rueil
Malmaison Cedex (FR)**
(84) Benannte Vertragsstaaten: **FR**

(72) Erfinder: **Zimmermann, Willibald, Grüner Weg 21,
D-5000 Köln 71 (DE)**
Erfinder: **Wessel, Heinz, Schmied-Biegge-Strasse 19,
D-5060 Bergisch-Gladbach 2 (DE)**
Erfinder: **Hartmann, Klaus, Im Aehlemaar 17,
D-5060 Bergisch-Gladbach 2 (DE)**

(74) Vertreter: **Ritzkowsky, Harald, Dipl.-Ing., Ford-Werke
Aktiengesellschaft Patentabteilung Z/DRP Ottoplatz 2,
D-5000 Köln 21 (DE)**

## Beschreibung

Die Erfindung bezieht sich auf ein Innenverkleidungsteil für Kraftfahrzeuge der im Oberbegriff des Patentanspruches 1 erläuterten Art.

Aus der DE-A-29 37 399 ist ein Innenverkleidungsteil für Kraftfahrzeuge bekannt, dessen Trägerteil aus einem mit Bindemittel getränktem Fasergrundmaterial durch Druck- und Wärmeeinwirkung in die vorgesehene Form gepresst und verfestigt ist. Als Fasergrundmaterial wird hierbei ein Gemisch von Polyester- und Acrylfasern gewählt, die in Verbindung mit einem Kunstharz-Bindemittel in Form von Faservliesmatten verpresst werden.

Dieses bekannte Innenverkleidungsteil weist den Nachteil auf, dass es durch den hohen Anteil von Kunststoffasern einen sehr harten steifen Trägerteil ergibt, der nicht die erwünschten geräuschdämmenden Eigenschaften aufweist, wie sie für ein Innenverkleidungsteil eines Kraftfahrzeuges gefordert werden.

Aus der EP-A-0 118 796 ist ein weiteres Innenverkleidungsteil für Kraftfahrzeuge bekannt, bei dem eine Lösung für eine saubere Gestaltung der erwünschten in unterschiedlichen Flächenbereichen unterschiedliche Überzugsmaterialien aufweisenden Sichtseite der Innenverkleidung aufgezeigt wird.

Diese aufgezeigte Abgrenzung zwischen unterschiedlichen Bezugsmaterialien ist für nichtschweissfähige Überzugsmaterialien, wie Stoff oder Leder vorgesehen, erfordert jedoch eine schwierige Ausformung von tiefen Nuten im Trägerteil.

Aus der DE-A-32 33 675 ist ein Innenverkleidungsteil für Kraftfahrzeuge bekannt, bei dem ein Trägerteil im Nassverfahren aus einem formstabilen gepressten Holzfaserwerkstoff besteht, der nach Anordnung von Polster- und Stoffeinsätzen in vorgewählten Flächenbereichen vollflächig mit einer Kunststoffolie kaschiert ist.

Der formstabile Holzfaserwerkstoff soll hierbei durch das Warmpress-Formwerkzeug unmittelbar mit einer Strukturierung für die dünne Kaschierfolie versehen werden.

Aus der EP-A-0 053 747 ist ein weiteres Innenverkleidungsteil für Kraftfahrzeuge bekannt, bei dem ein Trägerteil aus einem Laminat von zwei Faservliesmatten mit einem zwischengeschalteten Wellkartonteil gebildet wird. Es wird die Formvorrichtung für das Innenverkleidungsteil erläutert.

Dieses bekannte Innenverkleidungsteil weist den Nachteil auf, dass es durch den Wellkartonteil nicht in beliebig unterschiedlich tiefe Formverläufe geformt werden kann.

Die Aufgabe der Erfindung ist es, ein Innenverkleidungsteil für Kraftfahrzeuge der eingangs erläuterten Art derart zu verbessern, dass es in vorgewählten Flächenbereichen erwünschte Polstereffekte ohne zusätzliche Anordnung von Schaumstoffstreifen ermöglicht und darüberhinaus eine einwandfreie Anordnung der in diesen Bereichen erwünschten Stoffeinsätze auf einfache Weise sicherstellt.

Weiterhin soll eine weitgehend automatisierte Herstellung eines erfindungsgemässen Innenverkleidungsteiles durch die Anordnung entsprechender Vorrichtungen ermöglicht werden.

Gemäss der Erfindung wird diese Aufgabe gelöst, in dem ein Innenverkleidungsteil für Kraftfahrzeuge gemäss dem Oberbegriff des Patentanspruches 1 die im Kennzeichenteil des Patentanspruchs 1 erläuterten Merkmale aufweist.

Im Patentanspruch 2 ist die Massnahme zur langerichtigen Anordnung der in vorgewählten Flächenbereichen vorgesehenen Polster- und Stoffeinsätze erläutert und im Patentanspruch 3 ist die für eine weitgehend automatische Herstellung des Innenverkleidungsteils der Erfindung erforderliche Anordnung von Vorrichtungen aufgezeigt.

Dadurch, dass das Fasergrundmaterial in Form von Faservliesmatten von circa 20 bis 30 mm Dicke in einem Warmpress-Formwerkzeug bei etwa 4000 N/m² und circa 200° Celsius auf eine Enddicke von circa 1/10 der Ausgangsdicke verfestigt wird, wobei in vorgewählten Flächenbereichen, die z.B. von Stoffeinsätzen überdeckt werden sollen, eine grössere Enddicke von 2/10 bis 4/10 der Ausgangsdicke zur Erzielung eines Polstereffekts weniger verfestigt ist, kann auf überaus einfache Weise in bestimmten Flächenbereichen eine erwünschte weiche Griffigkeit erzielt werden.

Dadurch, dass die in vorgewählten Flächenbereichen vorgesehenen Polster- und/oder Stoffeinsätze nach erfolgtem vollflächigem Auftrag der für die Kunststoffolien-Kaschierung erforderlichen wärmeaktivierbaren Kleberbeschichtung durch Heissiegeln am Trägerteil festgelegt werden, wird bei der nachfolgenden vollflächigen Kunststoffolien-Kaschierung ein unerwünschtes Verrutschen dieser Einsätze sicher verhindert.

Dadurch, dass zur weitgehend automatischen Herstellung eines Innenverkleidungsteils der Erfindung eine automatische Beladestation, eine Richtstation und eine Formstation sowie eine Siegelstation aufeinanderfolgend angeordnet sind, wobei die Beladestation zwei parallel verfahrbare unabhängig voneinander anheb- und absenkbare Beladerahmen mit jeweils einer Vielzahl von entgegengesetzt zueinander schwenkbaren Nadelgreifern aufweist; die Richtstation eine Vielzahl von mit den Kanten der Fasermatte zusammenwirkenden verschiebbaren Richtschienen aufweist; die Formstation eine im Unterteil angeordnete Patritze mit in bestimmten Bereichen angeordneten Voreilern und an sich bekannten Auswerfern und im Oberteil die Matritze aufweist; die Siegelstation eine Aufnahme für das geformte Trägerteil und einen absenkbaren Siegelstempel von dem Bereich der Polster- und/oder Stoffeinsätze umfassenden Verlauf aufweist, wird ein sicherer Transport der schwierig zu handhabenden Faservliesmatten, deren Ausrichtung zur Erzielung eines minimalen Abfalls und deren entsprechend der gewünschten tiefen Formgebung vorgebauschte Anordnung im Warmpress-Formwerkzeug und die nachfolgend sichere Anordnung der erwünschten Stoffeinsätze sichergestellt.

Die Erfindung wird anhand eines in den beiliegenden Zeichnungen erläuterten Ausführungsbeispiels näher erläutert. Es zeigt:

Fig. 1 eine Schrägrissansicht eines Innenverkleidungsteiles gemäss der Erfindung;

Fig. 1a eine Schnittdarstellung entlang der Linie la–la;

Fig. 1b eine vergrösserte Schnittdarstellung des Bereichs in Kreis Ib in Fig. 1a;

Fig. 2 eine Schrägrissansicht der Anordnung der Vorrichtungen zur weitgehend automatischen Herstellung des Innenverkleidungsteiles;

Fig. 3a die Stellung der Nadelgreifer in ihrer Ruhelage;

Fig. 3b die Stellung der Nadelgreifer in ihrer Arbeitslage;

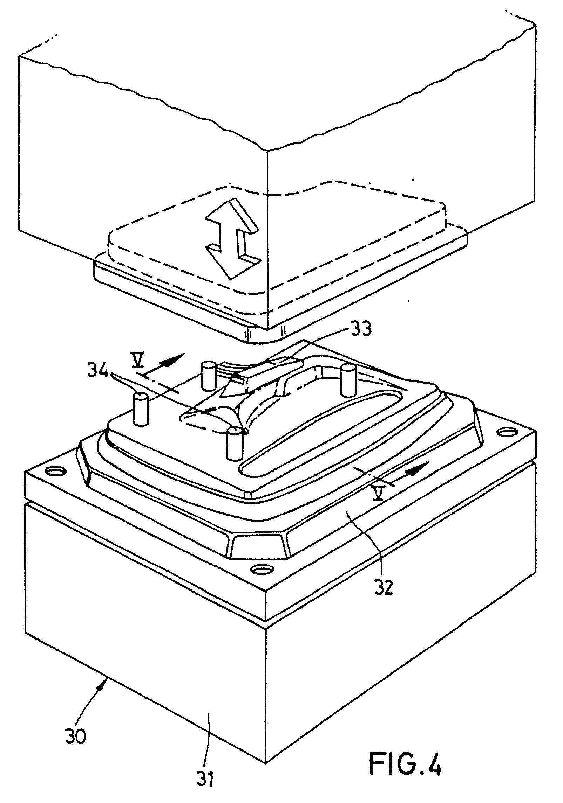

Fig. 4 eine Schrägrissansicht des Warmformwerkzeuges bei ausgefahrenem Voreiler und Auswerfern;

Fig. 5a einen vertikalen Schnitt durch das Formwerkzeug bei eingelegter, vorgebauschter Faservliesmatte;

Fig. 5b einen Schnitt ähnlich Fig. 5a nach erfolgtem Formvorgang;

Fig. 5c einen ähnlichen Schnitt wie Fig. 5a bei aktivierten Auswerfern;

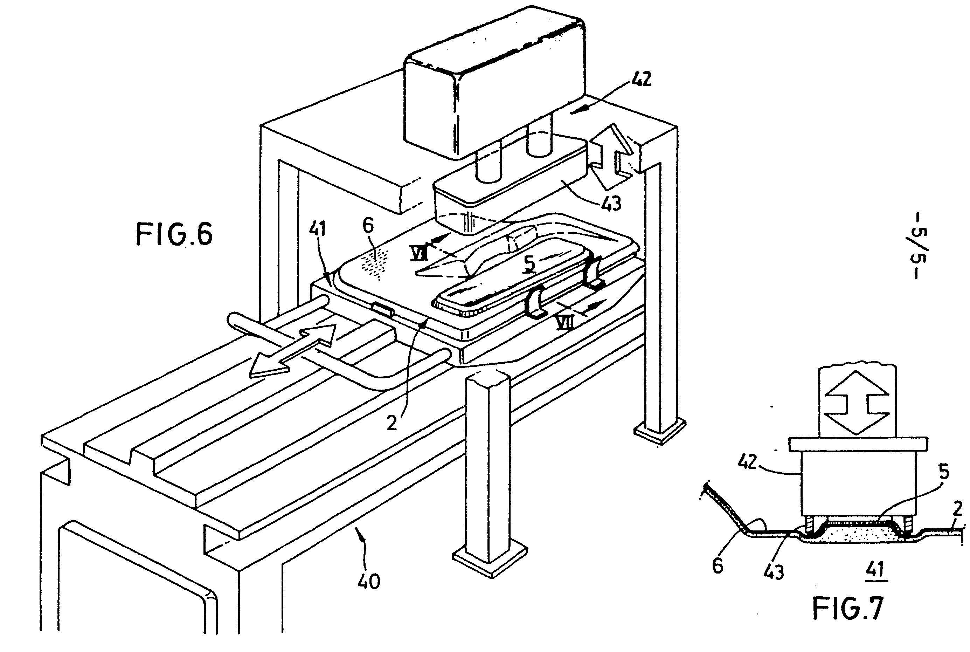

Fig. 6 eine Schrägrissansicht der Siegelstation und

Fig. 7 einen Vertikalschnitt durch den Bereich des Siegelstempels.

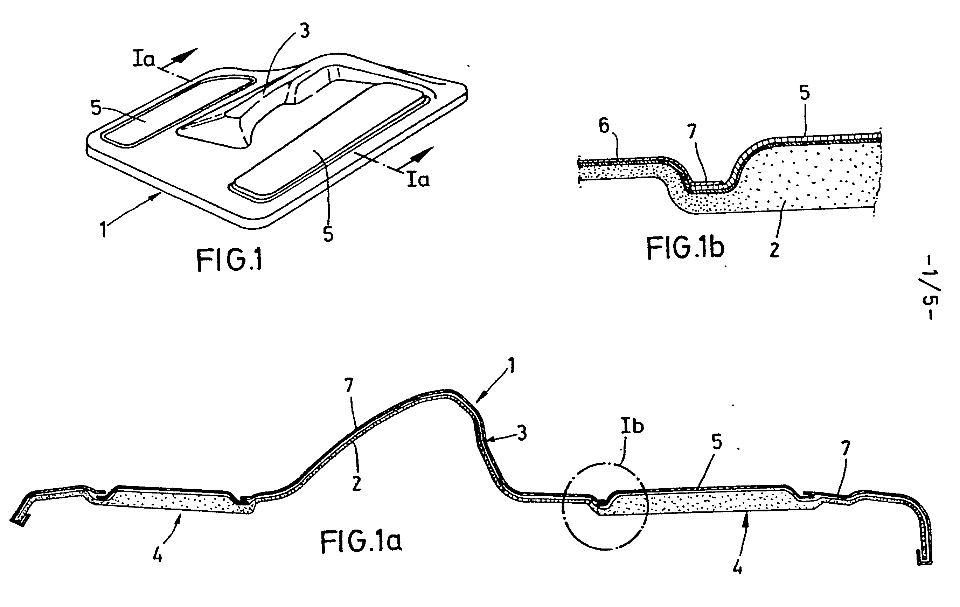

Das in Fig. 1 gezeigte Innenverkleidungsteil ist im vorliegenden Fall eine Türinnenverkleidung 1 für ein Kraftfahrzeug.

Das Innenverkleidungsteil 1 besteht aus einem Trägerteil 2, der aus einem Fasergrundmaterial aus circa 80% Holzfasern und circa 20% Kunstharzfasern durch Druck- und Wärmeeinwirkung in die vorgesehene Form gepresst und verfestigt ist. Die grösste Verformung muss hierbei im Bereich der Armlehne 3 erfolgen.

Oberhalb der Armlehne 3 ist in einem vorgewählten Flächenbereich 4 in dem ein Polster- und/oder Stoffeinsatz 5 angeordnet werden soll, die Verfestigung des Trägerteiles 2 geringer gehalten, so dass in diesem Bereich ein Polstereffekt durch das ursprüngliche Faservliesmaterial erzielt wird.

Der so gefertigte Trägerteil 2 wird mit einem vollflächigen Auftrag eines wärmeaktivierbaren Klebers 6 versehen, der für die vorgesehene vollflächige Kaschierung mit einer Kunststoffolie 7 erforderlich ist. An den vorgesehenen Flächenbereichen 4 können nunmehr Polster- und/oder Stoffeinsätze 5 von gewünschter Form angeordnet werden und durch Heissiegeln mit einem dem Umfangsverlauf der Einsätze entsprechenden Siegelstempel durch Aktivierung des Klebers 6 festgelegt werden.

Danach werden die Trägerteile in an sich bekannter Weise vollflächig kaschiert und mit eventuellen Zierleisten und dergleichen versehen.

Die manuelle Handhabung der Faservliesmatten ist infolge ihrer weichen Natur schwierig und führte bisher zu stark unterschiedlichen Positionierungen im Formwerkzeug, wodurch es zu erhöhtem Abfall und Ausschuss kam.

Gemäss der Erfindung wurde daher eine Beladestation 10 und eine Richtstation 20 einer Formstation 30 vorgeschaltet, sowie eine Siegelstation 40 nachgeschaltet.

Die Beladestation 10 weist eine Lagerfläche für auf Transportpaletten 11 angelieferte Stapel von Faservliesmatten 12 auf. Oberhalb des Stapels der Faservliesmatten 12 ist ein erster Beladerahmen 13 und parallel hierzu oberhalb der Richtstation 20 ist ein zweiter Beladerahmen 14 angeordnet. Die beiden Beladerahmen 13 und 14 sind unabhängig voneinander anheb- und absenkbar und parallel laufend seitlich verfahrbar.

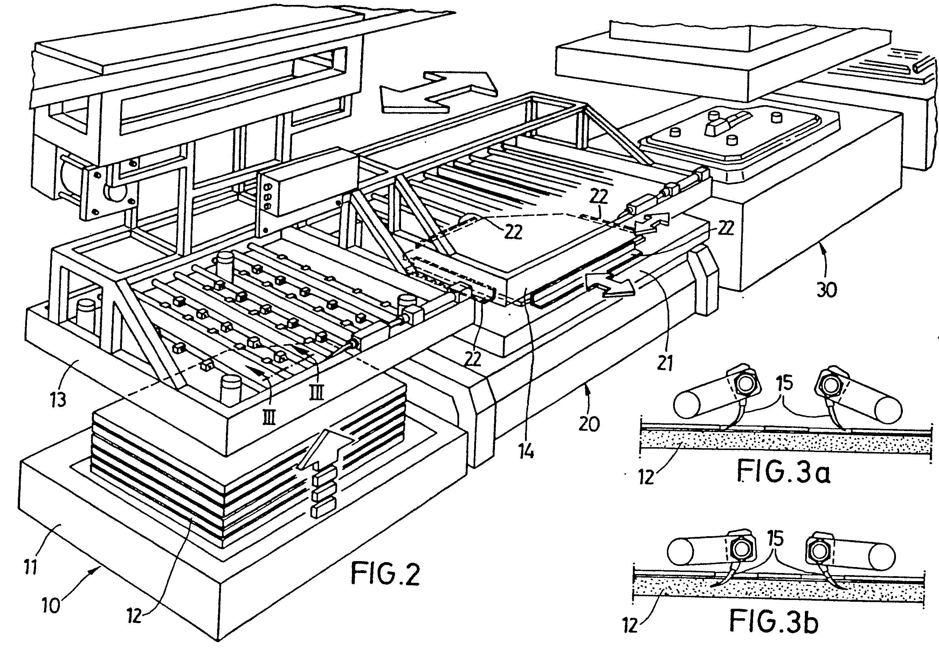

Jeder Beladerahmen 13 und 14 ist mit einer Vielzahl von entgegengesetzt zueinander schwenkbaren Nadelgreifern 15 versehen, die, wie aus den Figuren 3a und 3b zu ersehen ist, ein vereinzeltes Hochheben der Faservliesmatten 12 vom Stapel der Beladestation 10 bzw. ein Ablegen der Faservliesmatte 12 in der Richtstation bzw. in der Formstation 30 ermöglichen.

Die Richtstation 20 weist eine Auflageplatte 21 auf, an der mehrere mit den Kanten der Faservliesmatte 12 zusammenwirkende verschiebbare Richtschienen 22 vorgesehen sind.

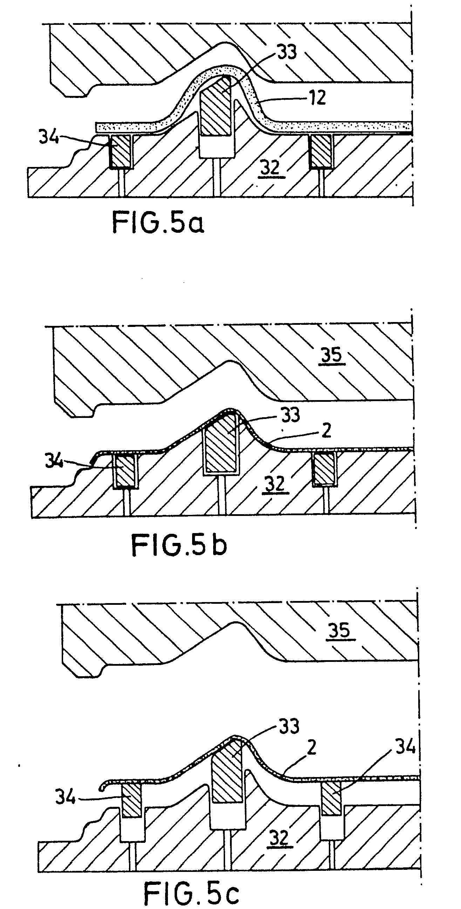

Die Formstation 30 besteht aus einem Pressentisch 31, auf dem in üblicher Weise eine Patritze 32 mit der Form der Rückseite des Trägerteiles 2 angeordnet ist. Das besondere an der Patritze 32 ist ein druckbelasteter Voreiler 33, in dem Bereich des Trägerteiles 2, in dem die grösste Ausformung erfolgen soll. Beim Einlegen der Faservliesmatte 12 durch den zweiten Rahmen 14 der Beladestation 10 wird somit die flexible Faservliesmatte 12 in der aus Fig. 5a ersichtlichen gebauschten Lage abgelegt.

Beim Schliessen des Formwerkzeuges durch die Matritze 35 weicht zunächst der Voreiler 33 zurück und darauffolgend wird die Faservliesmatte 12 durch Einwirken von Druck und Wärme in die Form des Trägerteiles 2 verfestigt, die aus Fig. 5b zu ersehen ist.

Nachfolgend wird das fertige Trägerteil 2 durch Betätigen der Auswerfer 34 und dem gleichfalls als Auswerfer wirkenden Voreiler 33 ausgestossen und kann entnommen werden.

Das fertig geformte Trägerteil 2 kann nun an einer herkömmlichen Fördereinrichtung an einer Sprüheinrichtung vorbeigeführt werden, die es mit einem vollflächigen Auftrag eines wärmeaktivierbaren Klebers 6 beschichtet.

Das so mit dem Kleber 6 beschichtete Trägerteil 2 kann nun in die Siegelstation 40 eingelegt werden, die im wesentlichen aus einer Aufnahme 41 für das geformte Trägerteil und einem Siegelstempel 42 mit einer Umfangselektrode 43 besteht, deren Verlauf dem Bereich des anzuordnenden Polster- und/oder Stoffeinsatzes 5 entspricht.

Die erfindungsgemässe Anordnung von Vorrichtungen zur Herstellung eines Innenverkleidungsteiles gemäss der Erfindung sichert eine reibungslose weitgehend automatisierte Herstellung solcher Innenverkleidungsteile mit einem Minimum an Materialabfällen und Ausschussteilen.

## Patentansprüche

1. Innenverkleidungsteil (1) für Kraftfahrzeuge, bestehend aus einem Trägerteil (2) aus einem Fasergrundmaterial aus circa 80% Holzfasern und circa 20% Kunstharzfasern, das durch Druck-und Wärmeeinwirkung in die vorgesehene Form gepresst und verfestigt ist und wobei in vorgewählten Flächenbereichen Polster- und/oder Stoffeinsätze (5) ortsfest angeordnet sind und das Trägerteil (2) auf seiner Sichtseite vollflächig mit einer Kunststoffolie (7) kaschiert ist, die in den Bereichen von Einsätzen durch umlaufend vorgesehene Präge-Trennnähte entfernbar ist, dadurch gekennzeichnet, dass das Fasergrundmaterial in Form von Faservliesmatten (12) von circa 20 bis 30 mm Dicke in einem Warmpress-Formwerkzeug (34/35) bei 4000 N/m² und circa 200° Celsius auf eine Enddicke von circa 1/10 der Ausgangsdicke verfestigt ist, wobei es in vorgewählten Flächenbereichen auf eine grössere Enddicke von 2/10 bis 4/10 der Ausgangsdicke geringer verfestigt ist, um unterhalb der Einsätze einen Polstereffekt bereitzustellen.

2. Innenverkleidungsteil nach Anspruch 1, dadurch gekennzeichnet, dass in vorgewählten Flächenbereichen vorgesehene Polster- und/oder Stoffeinsätze (5) nach vollflächigem Auftrag eines wärmeaktivierbaren Klebers (6) für die Kunststoffolien-Kaschierung (7) durch Heissiegeln am Trägerteil (2) festgelegt sind.

3. Vorrichtungsanordnung zur Herstellung eines Innenverkleidungsteiles nach den Ansprüchen 1 und 2, dadurch gekennzeichnet, dass eine Beladestation (10), eine Richtstation (20), eine Formstation (30) und eine Siegelstation (40) aufeinanderfolgend angeordnet sind, wobei
— die Beladestation (10) zwei parallel seitlich verfahrbare, anheb- und absenkbare Beladerahmen (13 und 14) mit jeweils einer Vielzahl von entgegengesetzt zueinander verschwenkbaren Nadelgreifern (15) aufweist;
— die Richtstation (20) eine Vielzahl von mit den Kanten der Fasermatte (12) zusammenwirkenden, verschiebbaren Richtschienen (22), aufweist;
— die Formstation (30) eine im Unterteil angeordnete Patritze (34) mit einem in einem bestimmten Bereich angeordneten Voreiler (33) und an sich bekannten Auswerfern (34) und im Oberteil eine Matritze (35) aufweist;
— die Siegelstation (40) eine Aufnahme (41) für das geformte Trägerteil (2) und einen absenkbaren Siegelstempel (42) mit einer Siegelelektrode (43) von dem Bereich der Polster- und/oder Stoffeinsätze (5) umfassenden Verlauf aufweist.

## Revendications

1. Elément de revêtement intérieur (1) de véhicules automobiles, constitué d'un élément de support (2) réalisé dans un matériau de base fibreux constitué d'environ 80% de fibres de bois, et d'environ 20% de fibres de résine synthétique, lequel est moulé et comprimé à la forme souhaitée par compression et sous l'action de la chaleur, et dans lequel sont placées de façon fixe des garnitures rembourrées et/ou de tissu (5), dans des zones planes présélectionnées, et où l'élément de support (2) est doublé sur toute sa surface visible d'une feuille de matière plastique (7) qui, dans les zones des garnitures, peut être éloignée par des joints de séparation estampés, prévus sur tout le pourtour, caractérisé en ce que le matériau de base fibreux se présente sous la forme de mats de fibres (12) d'environ 20 à 30 mm d'épaisseur, comprimés dans un outil de moulage par compression à chaud (34/35) sous 4000 N/m² et à environ 200 °C, pour atteindre une épaisseur finale d'environ 1/10 de l'épaisseur initiale, la compression étant moins importante dans des zones planes présélectionnées, et l'épaisseur finale plus grande, comprise entre 2/10 et 4/10 de l'épaisseur initiale, afin d'avoir un effet de rembourrage sous les garnitures.

2. Revêtement intérieur selon la revendication 1, caractérisé en ce que dans des zones planes présélectionnées, des garnitures rembourrées et/ou de tissu (5) prévues sont fixées par thermosoudage sur l'élément de support (2), après application sur toute la surface d'une colle (6) thermoactivable, pour le doublage avec des feuilles de matière plastique (7).

3. Agencement de dispositifs destinés à la fabrication d'un revêtement intérieur selon les revendications 1 et 2, caractérisée en ce qu'un poste de chargement (10), un poste de guidage (20), un poste de moulage (30) et un poste de thermosoudage (40) sont disposés l'un après l'autre,
— le poste de chargement (10) comportant deux châssis de chargement (13 et 14) pouvant se déplacer latéralement et parallèlement, pouvant être relevés et abaissés, comportant chacun une série de pinces à picots (15) pivotant en sens opposé;
— le poste de guidage (20) comportant une collection de rails de guidage (22) coulissants, coopérant avec les bords du mat de fibres (12);
— le poste de moulage (30) comportant un poinçon (34) disposé dans la partie inférieure avec un noyau (33) disposé dans une zone déterminée ainsi que des éjecteurs (34) connus en soi, et dans la partie supérieure, une matrice (35);
— le poste de thermosoudage (40) comportant un logement (41) pour l'élément de support (2) moulé et un poinçon de thermosoudage (42) pouvant être abaissé comportant une électrode de soudage (43) dont le tracé suit le pourtour de la zone des garnitures rembourrées et/ou de tissu (5).

## Claims

1. An interior covering component (1) for motor vehicles, comprising a carrier part (2) of a fibrous base material of approximately 80% wood fibres and approximately 20% synthetic fibres, which is pressed and consolidated by the action of pressure and heat into the intended shape, padding and/or fabric inserts (5) being rigidly secured in pre-selected surface areas and the carrier part (2) being bonded over the whole of its visible side with a foil of synthetic material (7) which in the regions of inserts can be removed by continuous impressed separation seams, characterised in that the fibrous base material in the form of fibrous fleece mats (12) of approximately between 20 and 30 mm in thickness is consolidated in a hot-pressing shaping tool (34/35) at 4000 N/m² and approximately 200 °C to a final thickness of approximately 1/10 of the initial thickness, it being consolidated to a lesser extent in pre-selected surface areas to produce a greater final thickness of between 2/10 and 4/10 of the initial thickness so as to provide a cushioning effect below the inserts.

2. An interior covering component according to Claim 1, characterised in that the padding and/or fabric inserts (5) provided in pre-selected surface areas are secured to the carrier part (2) by hot sealing after an overall application of a thermosetting adhesive (6) for the synthetic material foil bonding (7).

3. An apparatus arrangement for producing an interior covering component according to Claims 1 and 2, characterised in that a loading station (10), an aligning station (20), a shaping station (30) and a sealing station (40) are arranged in succession,

– the loading station (10) comprising two loading frames (13 and 14) which are laterally movable in a parallel manner and can be raised and lowered and which have in each case a plurality of pin grippers (15) which can be swung in opposite directions with respect to one another;

– the aligning station (20) comprising a plurality of displaceable alignment rails (22) which cooperate with the edges of the fibre mat (12);

– the shaping station (30) comprising a male mould (34) which is disposed in the lower part and which has an advancing member (33) disposed in a specified area and ejectors (34) known per se, and a female mould (35) in the upper part;

– the sealing station (40) comprising a receiving member (41) for the shaped carrier part (2) and a sealing punch (42) which can be lowered and which has a sealing electrode (43) of [a] shape embracing the area of the padding and/or fabric inserts (5).

FIG.1

FIG.1a

FIG.1b

FIG.2

FIG.3a

FIG.3b

EP 0 188 680 B1

-2/5-

FIG.4

11

- 4/5 -

FIG.5a

FIG.5 b

FIG.5c

FIG.6

FIG.7